# FASCICULE DE BREVET EUROPEEN

(11) **EP 3 715 770 B1**
(45) Date de publication et mention de la délivrance du brevet: **06.03.2024**
(21) Numéro de dépôt: 20155601.6
(22) Date de dépôt: 05.02.2020
(51) Int. Cl.: F41G 3/18, B64C 39/02, F41G 7/22, F41H 7/00, F42B 12/36, F42B 12/40, G05D 1/12, F41G 7/32, F41G 7/30

(54) **SYTÈME DE NEUTRALISATION D'UNE CIBLE UTILISANT UN DRONE ET UN MISSILE**
SYSTEM ZUR NEUTRALISATION EINES ZIELES MITTELS EINER DROHNE UND EINER LENKWAFFE
SYSTEM FOR NEUTRALIZING A TARGET WITH A DRONE AND A MISSILE

(30) Priorité: 27.03.2019 FR 1903128
(43) Date de publication de la demande: 30.09.2020
(73) Titulaire: MBDA France, 92350 Le Plessis-Robinson (FR)
(72) Inventeur: FORMOSO, Mathias, 92350 Le Plessis-Robinson (FR); JEAUNEAU, Vincent, 92350 Le Plessis-Robinson (FR); KOTENKOFF, Alexandre, 92350 Le Plessis-Robinson (FR); BANDINI, Alain, 92350 Le Plessis-Robinson (FR)
(74) Mandataire: Gevers & Orès

(56) Documents cités:
- EP-A1- 2 899 491
- FR-A1- 3 010 180
- US-A1- 2009 212 157
- US-A1- 2018 150 087

## Description

### DOMAINE TECHNIQUE

La présente invention concerne un système de neutralisation qui est pourvu d'au moins un drone et d'au moins un missile et qui est destiné à neutraliser une cible.

Dans le cadre de la présente invention, on entend par neutralisation d'une cible, le fait d'agir sur cette cible, pour la détruire au moins en partie ou pour la rendre inopérante au moins partiellement.

### ÉTAT DE LA TECHNIQUE

La présente invention s'applique au domaine militaire et à la neutralisation d'une cible, tel qu'un char par exemple, par l'intermédiaire d'au moins un missile.

Par les documents FR-3 016 690 et EP-2 899 491, on connaît un dispositif de marquage de cible qui comprend au moins une unité volante de taille réduite, qui est configurée pour voler à basse hauteur et pour être guidée à l'aide d'ordres de guidage, afin de s'approcher d'une cible et de la marquer par l'intermédiaire de l'émission d'un signal électromagnétique. Ce dispositif de marquage de cible peut être intégré dans un système de neutralisation d'une cible. Le système de neutralisation comporte également un missile destiné à neutraliser la cible, qui est dirigé vers le marquage de la cible réalisé par l'unité volante.

Ainsi, grâce au marquage de cible réalisé à l'aide de l'unité volante, il n'est pas nécessaire que le missile (ou un opérateur) émette des signaux, notamment un faisceau de désignation de cible, pour le guidage du missile de neutralisation vers la cible. Le missile est ainsi très discret.

Un tel système de neutralisation qui présente des avantages importants est toutefois limité dans son utilisation. En particulier, il est nécessaire que le missile puisse détecter le signal électromagnétique de marquage de la cible pour pouvoir réaliser la neutralisation. De plus, le missile doit être en mesure de pouvoir identifier la cible à neutraliser.

Il pourrait être avantageux de perfectionner ce système de neutralisation usuel, notamment pour élargir son domaine d'utilisation.

Par ailleurs, on connaît :
- par le document US 2018/150087, un procédé informatisé faisant intervenir au moins un drone et au moins un drone de commandement ou au moins une station de commandement, ce procédé comprenant des étapes permettant de détecter des individus traversant illégalement des frontières, de déployer au moins un drone apte à marquer ces individus et d'échanger des données ainsi que des ordres avec d'autres drones ou avec une station de commandement ; et
- par le document FR3 010 180, un procédé d'utilisation d'un missile, et notamment des étapes successives jusqu'à la neutralisation d'une cible au moyen d'un système de guidage faisant intervenir un poste de commande et un véhicule relais.

### EXPOSÉ DE L'INVENTION

La présente invention a pour objet de perfectionner un tel système de neutralisation. Elle concerne un système de neutralisation d'une cible, qui comporte au moins :
- un drone configuré pour pouvoir s'approcher en volant d'une cible et émettre au moins des informations de position de la cible ;
- au moins un missile apte à être guidé vers la cible afin de la neutraliser ; et
- au moins un poste de contrôle comprenant une unité de réception apte à recevoir lesdites informations de position émises par le drone et une unité d'affichage apte à présenter lesdites informations à un opérateur.

Selon l'invention, ledit système de neutralisation comporte un poste de tir configuré pour tirer et guider le missile, et :
- le poste de tir est situé à distance du poste de contrôle ;
- le poste de contrôle est configuré pour transmettre les informations de position au poste de tir ;
- le poste de tir est configuré pour transmettre au missile les informations de position, qui sont reçues du poste de contrôle ; et
- le missile est configuré pour pouvoir être guidé vers la cible à l'aide desdites informations de position reçues.

Grâce à l'invention, un opérateur se trouve dans la boucle de neutralisation, en particulier pour aider à identifier la cible, pour prendre la décision de neutraliser la cible et, en général, pour participer au guidage du missile utilisé pour la neutralisation.

Cette intervention de l'opérateur permet d'élargir le domaine d'utilisation du système de neutralisation, comme précisé ci-dessous.

Dans un mode de réalisation particulier, le poste de contrôle est également configuré pour transmettre les informations de position directement au missile. Dans une réalisation particulière de ce mode de réalisation particulier, le choix entre une transmission directe des informations de position du poste de contrôle vers le missile ou une transmission indirecte des informations de position via le poste de tir dépend de la situation courante..

Par ailleurs, dans un mode de réalisation particulier, le système de neutralisation comporte au moins un premier engin volant comprenant une unité de transmission apte au moins à servir de relais entre le drone et au moins le poste de contrôle. Dans une réalisation particulière, le drone est lié au poste de contrôle pour une transmission d'informations, via une chaîne de transmission d'informations comprenant successivement le drone, un ou plusieurs premiers engins volants servant de relais et le poste de contrôle.

Par ailleurs, avantageusement, le système de neutralisation comporte au moins un second engin volant comprenant au moins une structure d'emport configurée pour pouvoir recevoir au moins un drone, ledit engin volant étant configuré pour pouvoir transporter par vol au moins un drone installé sur ladite structure d'emport. De plus, avantageusement, le second engin volant comporte une unité d'alimentation électrique configurée pour alimenter électriquement un drone montée sur la structure d'emport, par exemple en chargeant une batterie du drone.

Lesdits premier et second engins volants peuvent être des engins volants différents, dont l'un présente une fonction de relais de transmission et l'autre une fonction de transport. Toutefois, dans un mode de réalisation préféré, il s'agit d'un seul et même engin volant qui combine les caractéristiques desdits premier et second engins volants, c'est-à-dire qui sert à la fois à transporter un ou des drones sur site et à servir de relais pour la communication entre le drone et le poste de contrôle.

Par ailleurs, avantageusement, le système de neutralisation comporte un module de contrôle de l'engin volant configuré pour pouvoir être manipulé par un opérateur, en particulier pour guider l'engin volant. L'engin volant peut ainsi être guidé par un opérateur.

En variante ou en complément, l'engin volant est pourvu d'une unité centrale apte à déterminer automatiquement des ordres de guidage utilisés pour guider l'engin volant. Ainsi, l'engin volant peut voler de façon autonome.

Dans un mode de réalisation préféré, le drone est pourvue d'au moins un capteur, notamment à bas coût en raison de la possibilité pour le drone de petite taille de pouvoir s'approcher au plus près de la cible ce qui nécessite des capteurs moins performants et donc moins coûteux.

Par ailleurs, dans un mode de réalisation particulier, ledit drone est pourvu d'un dispositif de positionnement pour déterminer la position dudit drone, ledit dispositif de positionnement comprenant une unité de réception faisant partie d'un système de positionnement par satellites, par exemple de type GPS (« Global Positioning System » en anglais). Cette position du drone peut notamment être utilisée pour déterminer la position de la cible lorsque le drone se trouve à proximité ou en contact de la cible.

En variante ou en complément, ledit drone est pourvu d'un système de référence inertielle intégré, apte à générer des données inertielles du drone, et le dispositif de positionnement est configuré pour déterminer la position du drone à partir des données inertielles générées par ledit système de référence inertielle. Ceci permet de déterminer la position du drone, même lorsque les données du système de positionnement par satellites ne sont pas accessibles, au moins de façon temporaire, par exemple lorsque le drone pénètre dans un ouvrage (tunnel,..) ou un bâtiment.

Par ailleurs, avantageusement, le système de neutralisation comporte un module de contrôle du drone configuré pour pouvoir être manipulé par un opérateur, en particulier pour guider le drone. Le drone peut ainsi être guidé par un opérateur.

En variante ou en complément, le drone est pourvu d'une unité centrale apte à déterminer automatiquement des ordres de guidage utilisés pour guider ledit drone. Ainsi, le drone peut voler de façon autonome.

### BRÈVE DESCRIPTION DES FIGURES

Les figures du dessin annexé feront bien comprendre comment l'invention peut être réalisée. Sur ces figures, des références identiques désignent des éléments semblables.
La figure 1 est le schéma synoptique d'un exemple de réalisation d'un système de neutralisation dont les caractéristiques ne relève pas de l'invention,
La figure 2 est le schéma synoptique d'un mode de réalisation d'un système de neutralisation selon l'invention.
La figure 3 montre un missile volant vers un char représentant une cible à neutraliser.
La figure 4 est une vue en perspective d'un exemple de drone.
La figure 5 monde schématiquement une chaîne de transmission d'informations entre un drone et un poste de pilotage.
La figure 6 une vue en perspective d'un exemple d'engin volant.

### DESCRIPTION DÉTAILLÉE

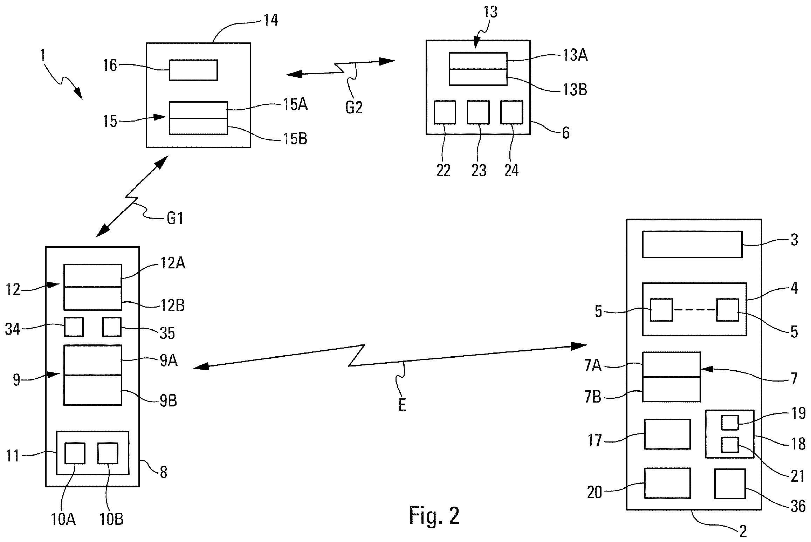

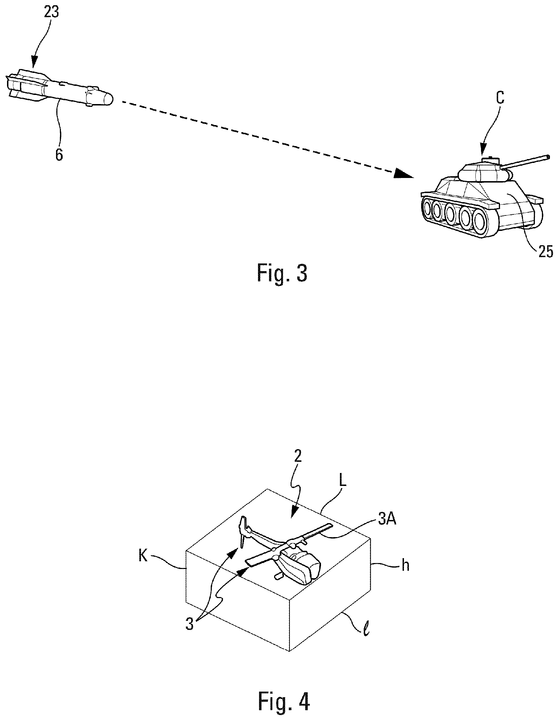

Le système de neutralisation 1 représenté schématiquement dans un mode de réalisation sur la figure 2, est destiné au moins à neutraliser une cible C, par exemple un char comme représenté sur la figure 3.

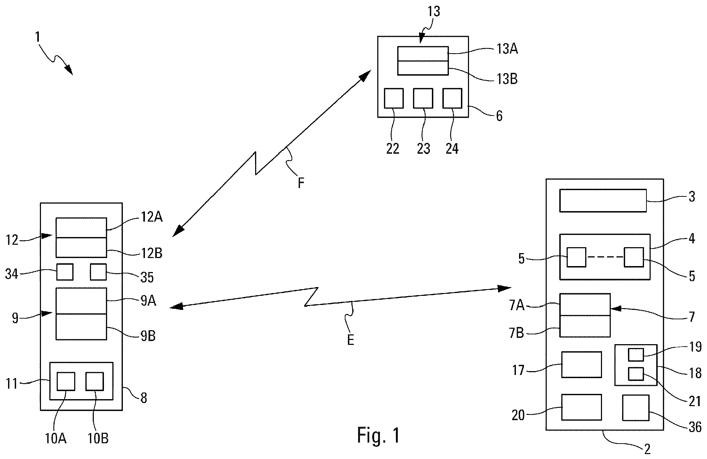

Pour ce faire, le système de neutralisation 1 comporte :
- un drone 2, c'est-à-dire un aéronef sans pilote, tel que représenté à titre d'illustration non limitative sur la figure 4. Ce drone 2 comprend des moyens 3 usuels (notamment des moyens de sustentation (aile fixe 3A (figure 3), ...) et de génération d'une force d'avancement), qui sont représentés de façon schématique sur les figures 1 et 2 et qui sont formés de manière à faire voler le drone 2. Plus particulièrement, comme précisé ci-dessous, le drone 2 est formé de manière à voler à basse hauteur, en étant guidé à l'aide d'ordres de guidage. De préférence, le drone 2 est projeté (ou amené) au plus près de la cible C avant de voler vers la cible C. De plus, de préférence, le drone 2 est pourvu d'un ensemble 4 de capteur(s) 5 précisés ci-dessous, qui sont notamment aptes à mesurer des paramètres de l'environnement ; et
- au moins un missile 6 apte à être guidé vers la cible C, comme montré sur la figure 3, afin de la neutraliser. Dans l'exemple de la figure 3, la cible C est un char 25.

On entend par neutraliser la cible C, le fait d'agir sur cette cible C, pour la détruire au moins en partie, ou tout au moins pour la rendre inopérante (au moins partiellement).

Dans le cadre de la présente invention, le drone 2 peut présenter des tailles variées.

Dans un mode de réalisation particulier, le drone 2 est tel qu'il peut s'inscrire dans un cube de 3 mètres de côté.

En outre, dans une réalisation particulière de ce mode de réalisation particulier, le drone 2 est de type « nano-drone » et présente, comme représenté à titre d'illustration (non limitative) sur la figure 4, de préférence les caractéristiques suivantes :
- une altitude de vol comprise entre 0 et 50 mètres ;
- une taille (c'est-à-dire des dimensions dans l'espace) dite réduite, c'est-à-dire une taille inférieure à celle d'un cube K (figure 4) de vingt centimètres de côtés, c'est-à-dire dont : L<20cm, I<20cm, h<20cm (avec L : longueur ; I : largeur ; h : hauteur). En d'autres termes, la taille du drone 2 est telle qu'il peut être complètement inséré dans un tel cube K ; et
- une distance de rapprochement du drone 2 par rapport à un objectif (tel que la cible C) qui est située entre 0 mètre (ou contact direct) et 10 mètres selon les cas.

Le drone 2 qui présente, dans cette réalisation particulière, une taille réduite lui permettant de voler à basse hauteur sans être repéré, est ainsi en mesure de s'approcher (de façon discrète) à proximité d'une cible C. La miniaturisation du drone 2 est essentielle en termes de discrétion dans le domaine militaire.

Le drone 2 comporte au moins un capteur 5 apte à déterminer des informations de position de la cible C et un élément d'émission 7A apte à transmettre ces informations de position. De préférence, l'élément d'émission 7A fait partie d'une unité d'émission/réception 7 qui est montée sur le drone 2 et qui comporte de plus un élément de réception 7B.

Selon l'invention, le système de neutralisation 1 comporte, également, au moins un poste de contrôle 8. Le poste de contrôle 8 qui est déporté par rapport à la cible C, c'est-à-dire qui est éloigné de cette dernière, comprend un élément de réception 9B apte à recevoir des données ou informations (et notamment lesdites informations de position) émises par l'élément d'émission 7A du drone 2. De préférence, l'élément de réception 9B fait partie d'une unité d'émission/réception 9 qui est installée dans le poste de contrôle 8 et qui comporte de plus un élément d'émission 9A.

Dans le cadre de la présente invention, quelle que soit l'unité d'émission/réception considérée, elle comporte à la fois :
- un élément d'émission configuré de façon usuelle pour émettre des données (ou informations), par exemple via une antenne, notamment sous forme de signaux électromagnétiques, données (ou informations) qui peuvent être reçues (c'est-à-dire captées) par une unité de réception d'une autre unité d'émission/réception qui est déportée ; et
- un élément de réception configuré de façon usuelle pour recevoir, par exemple via une antenne, des données (ou informations) qui ont été émises, notamment sous forme de signaux électromagnétiques, par une unité d'émission d'une autre unité d'émission/réception qui est déportée.

Ainsi, une transmission d'informations bidirectionnelle peut être réalisée entre l'unité d'émission/réception 7 du drone 2 et l'unité d'émission/réception 9 du poste de contrôle 8, comme illustré par une double flèche E sur la figure 1. Cette liaison de transmission de données E peut être de type électromagnétique ou de type filaire. Par cette transmission, le système de neutralisation 1 est apte à émettre et à recevoir des informations ou données, notamment sous forme de signaux de type électromagnétique, afin en particulier de transmettre du drone 2 au poste de contrôle 8 des informations (et notamment des informations de position de la cible C) et du poste de contrôle 8 au drone 2 des ordres (notamment des ordres de guidage dudit drone 2).

Le poste de contrôle 8 comprend également une unité d'affichage 10A apte à présenter des informations et notamment lesdites informations de position à un opérateur (non représenté) en les affichant sur un écran (également non représenté). L'unité d'affichage 10A peut notamment afficher des informations recueillies par un ou des capteurs 5 du drone 2, telles qu'un flux vidéo ou des images, permettant en particulier à l'opérateur d'effectuer l'identification de la cible et lui fournissant des données pour prendre la décision de neutraliser (ou non) la cible.

Le poste de contrôle 8 (et de commandement) peut notamment être situé dans un état-major ou dans une unité de commandement ou être déployé sur le terrain.

De plus, le missile 6 est configuré pour pouvoir être guidé vers la cible C (ou un groupe de cibles), à l'aide desdites informations de position reçues par le poste de contrôle 8, afin de neutraliser la cible C.

Ainsi, l'opérateur fait partie de la boucle de décision, relative notamment à la commande et au guidage du missile 6. En effet, dans ce cas, l'opérateur peut recevoir, via la liaison de transmission de données E, notamment des informations de position, par exemple sous forme d'images provenant du drone 2, qui sont affichées sur l'écran de l'unité d'affichage 10A.

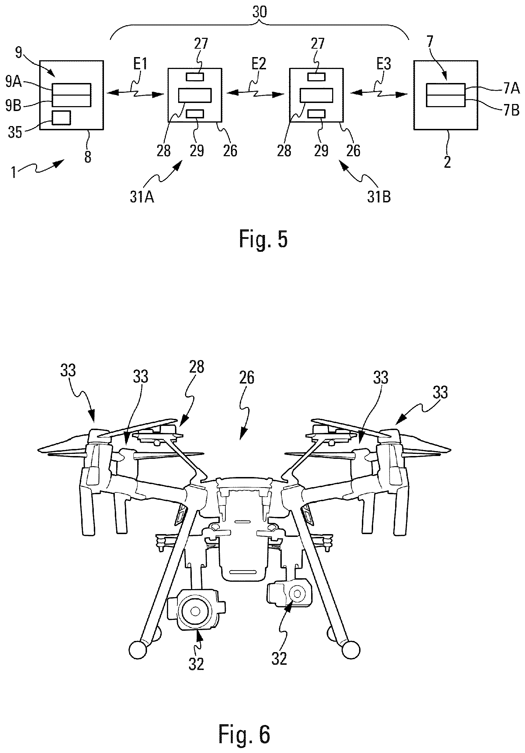

L'opérateur peut également générer des ordres notamment de guidage ou d'activation de fonctions particulières du drone 2, en fonction des informations reçues. Les ordres peuvent être transmis au drone 2 soit directement comme représenté sur les figures 1 et 2 via la liaison de transmission de données E, soit indirectement par l'intermédiaire de relais comme précisé ci-dessous en référence à la figure 5.

Pour ce faire, le poste de contrôle 8 comporte une unité d'interface 11 comprenant, par exemple, l'unité d'affichage 10A pourvue d'un écran et une unité de saisie de données 10B telle qu'une souris d'ordinateur, un pavé tactile ou une unité de reconnaissance vocale. Cette unité de saisie de données 10B permet à un opérateur de saisir des données, notamment des données telles que des ordres de guidage ou d'activation, qui doivent être transmises via l'unité de transmission de données E.

Le système de neutralisation 1 forme un réseau de communication.

Dans un exemple de réalisation particulier représenté sur la figure 1, le poste de contrôle 8 est configuré pour transmettre des informations, en particulier les informations de position, directement au missile 6.

Pour ce faire, le poste de contrôle 8 comprend un élément d'émission 12A apte à émettre lesdites informations. De préférence, l'élément d'émission 12A fait partie d'une unité d'émission/réception 12 qui est installée dans le poste de contrôle 8 et qui comporte de plus un élément réception 12B. L'unité d'émission/réception 12 peut correspondre à l'unité d'émission/réception 9 ou être une unité d'émission/réception autre que ladite unité d'émission/réception 9 comme dans l'exemple de la figure 1.

De plus, le missile 6 comprend un élément de réception 13B apte à recevoir lesdites informations émises par l'élément d'émission 12A du poste de contrôle 8. De préférence, l'élément de réception 13B fait partie d'une unité d'émission/réception 13 qui est installée sur le missile 6 et qui comporte de plus un élément d'émission 13A.

Ainsi, une transmission d'informations bidirectionnelle peut être réalisée entre l'unité d'émission/réception 13 du missile et l'unité d'émission/réception 12 du poste de contrôle 8, comme illustré par une double flèche F sur la figure 1. Cette liaison de transmission de données F peut être de type électromagnétique ou de type filaire. Par cette transmission, le système de neutralisation 1 est apte à émettre et à recevoir des informations ou données, notamment sous forme de signaux de type électromagnétique, afin en particulier de transmettre du poste de contrôle 8 au missile 6 des ordres (notamment de guidage dudit missile 6) qui sont par exemple générés par l'opérateur à l'aide de l'unité d'interface 11 et éventuellement de recevoir des données dudit missile 6.

En outre, dans un mode de réalisation illustrant l'invention et représenté sur la figure 2, le système de neutralisation 1 comporte un poste de tir 14 qui comporte des moyens 16 usuels qui sont configurés pour tirer et guider le missile 6 de façon usuelle. Le poste de tir 14 est situé à distance du poste de contrôle 8. Le poste de contrôle 8 transmet des informations au poste de tir 14 qui est configuré pour transmettre ensuite des informations au missile C, par exemple lesdites informations de position ou des ordres de guidage (générés au poste de contrôle 8 ou au poste de tir 14).

Pour ce faire, le poste de contrôle 8 comporte une unité d'émission/réception qui peut correspondre à l'unité d'émission/réception 12, comme dans l'exemple représenté sur la figure 2, ou être une unité d'émission/réception autre que ladite unité d'émission/réception 12.

De plus, pour communiquer avec le poste de contrôle 8, le poste de tir 14 comporte une unité d'émission/réception 15 comprenant un élément d'émission 15A et un élément de réception 15B.

Ainsi, une transmission d'informations bidirectionnelle peut être réalisée entre l'unité d'émission/réception 12 du poste de contrôle 8 et l'unité d'émission/réception 15 du poste de tir 14, comme illustré par une double flèche G1 sur la figure 2. Cette liaison de transmission de données G1 peut être de type électromagnétique ou de type filaire.

En outre, pour communiquer avec le missile 6, le poste de tir 14 comporte une unité d'émission/réception qui peut correspondre à l'unité d'émission/réception 15, comme dans l'exemple représenté sur la figure 2, ou être une unité d'émission/réception autre que ladite unité d'émission/réception 15.

De plus, à cet effet, le missile 6 comporte une unité d'émission/réception qui peut correspondre à l'unité d'émission/réception 13, comme dans l'exemple représenté sur la figure 2, ou être une unité d'émission/réception autre que ladite unité d'émission/réception 13.

Ainsi, une transmission d'informations bidirectionnelle peut être réalisée entre l'unité d'émission/réception 15 du poste de tir 14 et l'unité d'émission/réception 13 du missile 6, comme illustré par une double flèche G2 sur la figure 2. Cette liaison de transmission de données G2 peut être de type électromagnétique ou de type filaire.

Par ailleurs, dans un mode de réalisation préféré (non représenté), le système de neutralisation 1 comporte les caractéristiques des deux modes de réalisation des figures 1 et 2, avec à la fois la liaison de transmission de données F et les liaisons de transmission de données G1 et G2. Le choix entre une transmission directe du poste de contrôle 8 vers le missile ou une transmission indirecte via le poste de tir 14, dépend de la situation courante, à savoir notamment de la mission, du type de missile utilisé, de la position géographique des différents éléments, ...

Dans un mode de réalisation préféré, le drone 2 est pourvu d'un ou de plusieurs capteurs 5 à bas coût. En effet, en raison de la possibilité pour le drone 2 de petite taille de pouvoir s'approcher au plus près de la cible C, il peut utiliser des capteurs à performance et donc à coût réduits.

Le drone 2 comprend des capteurs 5 permettant la recherche, la localisation et/ou l'identification de la cible C. L'opérateur réalise l'identification ou la confirmation de l'identification via les informations recueillies par ces capteurs 5 et transmises au poste de contrôle 8.

A titre d'illustration, dans un mode de réalisation particulier, le drone 2 est pourvu d'au moins certain des capteurs 5 (ou moyens d'identification) usuels suivants :
- un capteur apte à générer une image (optique ou infrarouge) ou un flux vidéo d'au moins une partie de l'environnement du drone 2. Cette image (ou ce flux vidéo) peut être affichée sur l'écran de l'unité d'affichage 10A située au niveau du poste de contrôle 8, ce qui permet à un opérateur déporté de voir l'environnement du drone 2 et notamment le cas échéant la cible C, et ceci avant (et éventuellement après) la neutralisation de la cible C ;
- un capteur thermique ;
- un capteur apte à analyser un paramètre chimique (analyse de la signature chimique : peintures, explosifs, gaz d'échappement, ...) ;
- un capteur apte à analyser un paramètre électromagnétique ;
- un capteur de type mécanique (sonar, détecteur de vibrations ou détecteur sismique) ;
- un lidar ;
- un télémètre.

Le drone 2 comprend des capteurs permettant une extraction de coordonnées sur la cible C à neutraliser et une mise à jour de ces coordonnées, qui sont suffisamment précises pour pouvoir procéder au guidage du missile 6 en temps réel vers cette cible C. Toute ou une partie de la phase de navigation et de guidage du missile 6 est mise en oeuvre à partir des coordonnées fournies au poste de contrôle 8 par certains des capteurs 5. En plus des coordonnées de la cible C, peuvent être également transmises via la liaison E toutes autres informations susceptibles d'aider à l'engagement ou au guidage du missile 6, en particulier des informations cinématiques (vitesse, accélération, ...) et éventuellement l'attitude (orientation spatiale) de la cible C.

Par ailleurs, le système de neutralisation 1 comporte un module de contrôle 34 configuré pour pouvoir être manipulé par un opérateur dans le but de contrôler le drone 2, en particulier pour guider le drone 2 ou pour commander d'autres actions telles que l'activation d'un capteur ou de tout autre équipement du drone 2. Ce module de contrôle 34 peut faire partie du poste de contrôle 8, comme représenté sur les figures 1 et 2, en étant par exemple intégré dans l'unité d'interface 11. Ce module de contrôle 34 peut également être un module déporté, qui est lié par une liaison de transmission d'informations dédiée au drone 2 et qui peut être commandé par un opérateur présent dans la zone des opérations.

Dans un mode de réalisation particulier, le drone 2 est pourvu d'une unité centrale 17 apte à déterminer automatiquement des ordres de guidage utilisés par les moyens 3 pour guider ledit drone 2. Le drone 2 peut ainsi être guidé automatiquement sans intervention (ou avec une intervention restreinte) d'un opérateur, généralement en suivant un plan de vol préétabli. Le drone 2 peut ainsi voler de façon autonome.

Le drone 2 peut par conséquent soit être guidé de manière autonome, soit être commandé à distance par un opérateur via le module de contrôle 34.

Par ailleurs, dans un mode de réalisation particulier, le drone 2 est pourvu, comme représenté sur les figures 1 et 2, d'un dispositif de positionnement 18 configuré pour déterminer la position (géographique) du drone 2 dans l'espace. Le dispositif de positionnement 18 comprend une unité de réception 19 faisant partie d'un système de positionnement par satellites, par exemple de type GPS (« Global Positioning System » en anglais).

La position du drone 2, déterminée par le dispositif de positionnement 18, peut notamment être utilisée pour déterminer la position de la cible C lorsque le drone 2 se trouve à proximité ou en contact de la cible C et donc pour générer ladite information de position de la cible C.

Elle peut également être utilisée pour guider le drone 2, soit en permettant à un opérateur de suivre le drone 2 lorsqu'il est guidé à distance, soit en fournissant des informations de position courante à l'unité centrale 17 lors d'un guidage automatique.

En variante ou en complément, le drone 2 est pourvu d'un système de référence inertielle 20 intégré. Ce système de référence inertielle 20 est apte à générer, de façon usuelle, des données inertielles du drone 2, telles que sa vitesse ou son accélération notamment. Le dispositif de positionnement 20 comprend une unité de calcul 21 qui est configurée pour déterminer la position du drone 2 en utilisant des données inertielles générées par le système de référence inertielle 20, ainsi qu'en utilisant par exemple un ou des plans locaux (par exemple d'un bâtiment dans lequel le drone va pénétrer) lorsque de tels plans sont disponibles. Ainsi, le dispositif de positionnement 18 est en mesure de déterminer la position du drone 2, même lorsque les données du système de positionnement par satellites ne sont pas accessibles au moins de façon temporaire, par exemple lorsque le drone 2 pénètre dans un ouvrage (tel qu'un tunnel par exemple) ou dans un bâtiment.

Dans ce cas, on peut utiliser les données inertielles pour déterminer la position (en relatif) par rapport à la dernière position absolue mesurée (de préférence à l'aide des données GPS).

Ces données inertielles peuvent également être utilisées par l'unité de calcul 21 conjointement avec les données GPS, par exemple pour affiner la position déterminée à l'aide notamment de données fournies par l'unité de réception 19.

Le mode de localisation peut s'appuyer sur l'exploitation de différents capteurs tels que, notamment, une caméra (visible ou thermique), un lidar, un capteur inertiel, un télémètre, un capteur GPS. Toutes ces informations (provenant des capteurs) peuvent également être hybridées entre elles pour améliorer la qualité de la localisation (position du drone 2).

Dans un mode particulier d'utilisation, le drone 2 peut être équipé d'une petite charge militaire 36 capable de neutraliser directement une cible sans qu'un missile ne soit tiré. Cette charge militaire 36 peut notamment être déclenchée automatiquement ou par un opérateur à l'aide en particulier de l'unité de contrôle 34.

Dans un mode de réalisation particulier, le drone 2 intègre un dispositif lui permettant de se poser sur la cible C pour la marquer de façon brève ou plus durable, et de manière à permettre de la localiser quels que soient ses déplacements. Ce dispositif permet notamment de marquer la cible dans une zone (zone urbaine,...) peu propice à une frappe par le missile et de neutraliser la cible (ainsi marquée) une fois qu'elle est sortie de cette zone. Grâce à ses capacités d'approche et à sa taille réduite, le drone 2 est également en mesure de marquer la cible dans une zone difficile d'accès ou sans vision directe.

Par ailleurs, comme représenté sur les figures 1 et 2, le missile 6 comprend de plus :
- une unité de gestion 22 formée de manière à gérer (ou traiter) des informations, notamment de position, reçues via la liaison de transmission de données F ou G2, en vue du guidage du missile 6 ;
- des moyens usuels 23 (notamment des moyens de sustentation et des moyens de génération d'une force d'avancement), qui sont représentés de façon schématique et qui sont formés de manière à faire voler le missile 6 ; et
- des moyens 24 de neutralisation de la cible C, notamment une charge militaire.

Le missile 6 est ainsi très discret et présente un faible coût. De plus, il est autonome, car il utilise uniquement les signaux relatifs à la liaison de transmission de données F ou G2 pour être guidé vers la cible C.

Par ailleurs, dans un mode de réalisation particulier représenté sur la figure 5, le système de neutralisation 1 comporte au moins un engin volant 26.

Cet engin volant 26 est un drone, c'est-à-dire un aéronef sans pilote. Cet engin volant 26 comprend des moyens usuels 27 (notamment des moyens de sustentation (ailes tournantes 33 (figure 6)) et de génération d'une force d'avancement), qui sont représentés de façon schématique et qui sont formés de manière à faire voler l'engin volant 26.

L'engin volant 26 comprend également une unité de transmission 28 apte au moins à servir de relais entre le drone 2 et au moins le poste de contrôle 8. Cette unité de transmission 28 est configurée pour réémettre des signaux électromagnétiques qu'elle reçoit.

A cet effet, l'engin volant 26 peut être intégré aussi bien dans le mode de réalisation du système de neutralisation 1 de la figure 1 que dans celui de la figure 2, pour servir de relais entre le drone 2 et le poste de contrôle 8. Pour des raisons de simplification du dessin, on a uniquement représenté les unités d'émission/réception 7 et 9 sur la figure 5 ; étant entendu que le drone 2 et le poste de contrôle 8 peuvent comporter l'ensemble des autres éléments et systèmes décrits par ailleurs et représentés notamment sur les figures 1 et 2.

Le système de neutralisation 1 comporte, en outre, un module de contrôle 35 de l'engin volant 26, configuré pour pouvoir être manipulé par un opérateur, en particulier pour guider l'engin volant 26. Ce module de contrôle 35 peut faire partie du poste de contrôle 8, comme représenté sur les figures 1, 2 et 5, étant par exemple intégré dans l'unité d'interface. 11. Ce module de contrôle 35 peut également être autonome et être lié par une liaison de transmission d'informations dédiée à l'engin volant 26. L'engin volant 26 peut ainsi être guidé par un opérateur à l'aide dudit module de contrôle 35.

En variante ou en complément, l'engin volant 26 est pourvu d'une unité centrale 29 apte à déterminer automatiquement des ordres de guidage utilisés pour guider l'engin volant 26. Ainsi, l'engin volant 26 peut voler de façon autonome.

Dans le mode de réalisation particulier, représenté sur la figure 5, le drone 2 est lié au poste de contrôle 8 pour une transmission d'informations, via une chaîne de transmission d'informations 30. Cette chaîne de transmission d'informations 30 entre le drone 2 et le poste de contrôle 8 comprend un ou plusieurs engins volants 26 servant de relais, à savoir deux engins volants 26 dans l'exemple de la figure 5.

Dans l'exemple de la figure 5, le poste de contrôle 8 communique avec un engin volant 26 (situé à une position 31A) via une liaison de transmission d'informations E1 à l'aide de l'unité d'émission/réception 9 du poste de contrôle 8 et de l'unité de transmission 28 de l'engin volant 26, cet engin volant 26 communique avec l'autre engin volant 26 (situé à une position 31B) via une liaison de transmission d'informations E2 à l'aide de leurs unités de transmission 28 respectives, et ce second engin volant 26 communique avec le drone 2 via une liaison de transmission d'informations E3 à l'aide de l'unité de transmission 28 de l'engin volant 26 et de l'unité d'émission/réception 7 du drone 2.

Le ou les engins volants 26 sont utilisés comme relais notamment lorsque le drone 2 ne dispose pas de suffisamment de portée pour pouvoir communiquer avec le poste de contrôle 8.

Par ailleurs, dans un mode de réalisation préféré, un ou plusieurs des engins volants 26 comprennent au moins une structure d'emport 32, comme représenté sur la figure 6.

La ou les structures d'emport 32 sont configurées pour pouvoir recevoir, chacune, un ou plusieurs drones 2. Chaque structure d'emport 32 comporte des moyens (non représentés) de réception et d'arrimage du drone 2.

L'engin volant 26 est ainsi configuré pour pouvoir transporter (par vol) au moins un drone 2 qui est installé sur l'une des structures d'emport 32. L'engin volant 26 présente des caractéristiques (notamment de taille et de puissance) permettant de réaliser un tel transport. Le drone 2 peut ainsi être véhiculé vers une zone de mission par un engin volant 26 bénéficiant d'un rayon d'action et d'une autonomie plus importants que ceux du drone 2. L'engin volant 26 peut notamment être utilisé lorsque le drone 2 n'a pas suffisamment de portée ou d'autonomie pour s'approcher de la cible C, par exemple à partir d'une zone de largage.

De plus, l'engin volant 26 comporte une unité d'alimentation électrique (non représentée) qui est configurée pour alimenter électriquement un drone 2 monté sur la structure d'emport 32, par exemple en comprenant des moyens usuels permettant de charger une batterie du drone 2.

Cet engin volant présentant une fonction de transport peut être différents des engins volants présentant une fonction de relais de transmission.

Toutefois, dans le mode de réalisation préféré, il s'agit d'un seul et même engin volant 26 qui sert à la fois à transporter un ou des drones 2 sur site pour les emmener à proximité de la cible C et à servir de relais (via une unité de transmission 28) pour la communication entre le drone 2 et le poste de contrôle 8, soit individuellement, soit via une chaîne de communication 30 comprenant d'autres engins volants 26 de relais.

Lorsque le missile 6 a effectué sa mission, c'est-à-dire lorsqu'il a neutralisé la cible C, par exemple un bâtiment ou bien un véhicule tel qu'un char 25 comme représenté sur la figure 6, le drone 2 peut réaliser un compte-rendu de mission, par exemple en prenant une image (ou une vidéo) de l'environnement de la cible C neutralisée, à l'aide d'un capteur 5 approprié. Cette image (ou cette vidéo) peut :
- être envoyée au poste de contrôle 8 déporté pour être présentée sur l'unité d'affichage 10A, ce qui permet notamment à un opérateur se trouvant à ce poste de contrôle 8 déporté de savoir immédiatement si le missile 13 a bien rempli sa mission ; et/ou
- être enregistrée dans une mémoire (non représentée) intégrée dans le drone 2, pour une lecture et un traitement ultérieurs.

Le drone 2 doit être suffisamment petit et agile pour pouvoir s'approcher de la cible C et/ou pour pénétrer dans un espace confiné, tout en restant discret. Le drone 2 (d'observation et d'acquisition) peut mettre en oeuvre au moins certaines des fonctions suivantes :
- s'approcher de la cible C ;
- observer et reconnaître la cible C ;
- mesurer des paramètres de l'environnement de la cible C ;
- transmettre une information, notamment de position, au poste de contrôle 8 ; et
- éventuellement, réaliser une vérification de la neutralisation de la cible C et fournir un compte-rendu de mission.

Le système de neutralisation 1, tel que décrit ci-dessus, présente ainsi notamment les avantages suivants :
- il fiabilise la localisation, l'identification et l'assignation d'une cible C ;
- il maintient un opérateur dans la boucle de décision ;
- en fournissant des informations au poste de contrôle, il permet de laisser plus de temps à la mise en oeuvre d'une étape d'observation et d'acquisition ;
- il permet de réduire le coût de la chaîne fonctionnelle :
   - parce que les fonctions coûteuses d'acquisition ne sont pas intégrées dans le missile 6, mais sont déportées dans le drone 2 qui peut être réutilisable ; et
   - parce qu'en s'approchant près de la cible C, le drone 2 (d'observation et d'acquisition) peut utiliser des capteurs 5 de coûts réduits ; et
- il offre une flexibilité d'utilisations.

Le système de neutralisation 1 peut servir à neutraliser différents types de cibles, et notamment des objectifs terrestres (éléments déplaçables ou éléments d'infrastructure), navals (bateaux ou éléments d'infrastructure), des matériels légers, des éléments situés en espace libre ou en espace confiné, et éventuellement des éléments aéroportés opérant à basses altitudes (tels que des hélicoptères par exemple).

## Revendications

1. Système de neutralisation d'au moins une cible, ledit système (1) comportant au moins :
- un drone (2) configuré pour pouvoir s'approcher en volant d'une cible (C) et émettre au moins des informations de position de la cible (C) ;
- au moins un missile (6) apte à être guidé vers la cible (C) afin de la neutraliser ; et
- au moins un poste de contrôle (8) comprenant une unité de réception (9B) apte à recevoir lesdites informations de position émises par le drone (2) et une unité d'affichage (10A) apte à présenter lesdites informations à un opérateur,
caractérisé qu'il comporte un poste de tir (14) configuré pour tirer et guider le missile (6), et en ce que :
- le poste de tir (14) est situé à distance du poste de contrôle (8) ;
- le poste de contrôle (8) est configuré pour transmettre les informations de position au poste de tir (14) ;
- le poste de tir (14) est configuré pour transmettre au missile (6) les informations de position, qui sont reçues du poste de contrôle (8) ; et
- le missile (6) est configuré pour pouvoir être guidé vers la cible (C) à l'aide desdites informations de position reçues.

2. Système selon la revendication 1,
**caractérisé en ce que** le poste de contrôle (8) est également configuré pour transmettre les informations de position directement au missile (6).

3. Système selon la revendication 2,
**caractérisé en ce que** le choix entre une transmission directe des informations de position du poste de contrôle (8) vers le missile (6) ou une transmission indirecte des informations de position via le poste de tir (14) dépend de la situation courante.

4. Système selon l'une quelconque des revendications précédentes,
**caractérisé en ce qu'**il comporte au moins un engin volant (26) comprenant une unité de transmission (28) apte au moins à servir de relais entre le drone (2) et au moins le poste de contrôle (8).

5. Système selon la revendication 4,
**caractérisé en ce que** le drone (2) est lié au poste de contrôle (8) pour une transmission d'informations, via une chaîne de transmission d'informations (30) comprenant successivement le drone (2), un ou plusieurs engins volants (26) servant de relais et le poste de contrôle (8).

6. Système selon l'une quelconque des revendications précédentes,
**caractérisé en ce qu'**il comporte au moins un engin volant (26) comprenant au moins une structure d'emport (32) configurée pour pouvoir recevoir au moins un drone (2), ledit engin volant (26) étant configuré pour pouvoir transporter par vol un drone (2) installé sur ladite structure d'emport (32).

7. Système selon la revendication 6,
**caractérisé en ce que** l'engin volant (26) comporte une unité d'alimentation électrique configurée pour alimenter électriquement un drone installé sur la structure d'emport.

8. Système selon l'une quelconque des revendications 6 et 7,
**caractérisé en ce qu'**il comporte un module (35) de contrôle de l'engin volant (26) configuré pour pouvoir être manipulé par un opérateur.

9. Système selon l'une quelconque des revendications précédentes,
**caractérisé en ce que** l'engin volant (26) est pourvu d'une unité centrale (29) apte à déterminer automatiquement des ordres de guidage utilisés pour guider ledit engin volant (26).

10. Système selon l'une quelconque des revendications précédentes,
**caractérisé en ce que** ledit drone (2) est pourvu d'au moins un capteur (5).

11. Système selon l'une quelconque des revendications précédentes,
**caractérisé en ce que** ledit drone (2) est pourvu d'un dispositif de positionnement (18) pour déterminer la position dudit drone (2), ledit dispositif de positionnement (18) comprenant une unité de réception (19) faisant partie d'un système de positionnement par satellites.

12. Système selon la revendication 11,
**caractérisé en ce que** le drone (2) est pourvu d'un système de référence inertielle (20) intégré, apte à générer des données inertielles du drone (2), et le dispositif de positionnement (18) est configuré pour déterminer la position du drone (2) au moins à partir des données inertielles générées par ledit système de référence inertielle (20).

13. Système selon l'une quelconque des revendications précédentes,
**caractérisé en ce qu'**il comporte un module (34) de contrôle du drone (2) configuré pour pouvoir être manipulé par un opérateur.

14. Système selon l'une quelconque des revendications précédentes,
**caractérisé en ce que** le drone (2) est pourvu d'une unité centrale (17) apte à déterminer automatiquement des ordres de guidage utilisés pour guider ledit drone (2).

## Patentansprüche

1. System zur Neutralisation mindestens eines Ziels, wobei das System (1) mindestens Folgendes umfasst:
- eine Drohne (2), die konfiguriert ist, um sich fliegend einem Ziel (C) annähern zu können und mindestens Positionsinformationen des Ziels (C) zu senden;
- mindestens einen Flugkörper (6), der geeignet ist, zum Ziel (C) hin geführt zu werden, um es zu neutralisieren; und
- mindestens einen Steuerposten (8), umfassend eine Empfangseinheit (9B), die geeignet ist, die von der Drohne (2) gesendeten Positionsinformationen zu empfangen, und eine Anzeigeeinheit (10A), die geeignet ist, einem Betreiber die Informationen zu präsentieren,
**dadurch gekennzeichnet, dass** es einen Schießposten (14) umfasst, der konfiguriert ist, um den Flugkörper (6) abzuschießen und zu führen, und dadurch, dass
der Schießposten (14) vom Steuerposten (8) beabstandet gelegen ist;
- der Steuerposten (8) konfiguriert ist, um die Positionsinformationen an den Schießposten (14) zu übertragen;
- der Schießposten (14) konfiguriert ist, um die Positionsinformationen, die von dem Steuerposten (8) empfangen werden, an den Flugkörper (6) zu übertragen; und
- der Flugkörper (6) konfiguriert ist, um mithilfe der empfangenen Positionsinformationen zum Ziel (C) hin geführt werden zu können.

2. System nach Anspruch 1,
**dadurch gekennzeichnet, dass** der Steuerposten (8) ebenfalls konfiguriert ist, um die Positionsinformationen direkt an den Flugkörper (6) zu übertragen.

3. System nach Anspruch 2,
**dadurch gekennzeichnet, dass** die Wahl zwischen einer direkten Übertragung der Positionsinformationen von dem Steuerposten (8) zum Flugkörper (6) hin oder einer indirekten Übertragung der Positionsinformationen über den Schießposten (14) von der aktuellen Situation abhängt.

4. System nach einem der vorstehenden Ansprüche,
**dadurch gekennzeichnet, dass** es mindestens ein Fluggerät (26) umfasst, das eine Übertragungseinheit (28) umfasst, die geeignet ist, zumindest als Zwischenstation zwischen der Drohne (2) und mindestens dem Steuerposten (8) zu fungieren.

5. System nach Anspruch 4,
**dadurch gekennzeichnet, dass** die Drohne (2) für eine Übertragung von Informationen über eine Informationsübertragungskette (30) mit dem Steuerposten (8) verbunden ist, die sukzessive die Drohne (2), ein oder mehrere Fluggeräte (26), die als Zwischenstation dienen, und den Steuerposten (8) umfasst.

6. System nach einem der vorstehenden Ansprüche,
**dadurch gekennzeichnet, dass** es mindestens ein Fluggerät (26) umfasst, das mindestens eine Lasttragestruktur (32) umfasst, die konfiguriert ist, um mindestens eine Drohne (2) aufnehmen zu können, wobei das Fluggerät (26) konfiguriert ist, um eine auf der Lasttragestruktur (32) aufgestellte Drohne (2) per Flug transportieren zu können.

7. System nach Anspruch 6,
**dadurch gekennzeichnet, dass** das Fluggerät (26) eine Stromversorgungseinheit umfasst, die konfiguriert ist, um eine auf der Lasttragestruktur aufgestellte Drohne mit Strom zu versorgen.

8. System nach einem der Ansprüche 6 und 7,
**dadurch gekennzeichnet, dass** es ein Steuermodul (35) des Fluggeräts (26) umfasst, das konfiguriert ist, um von einem Betreiber bedient werden zu können.

9. System nach einem der vorstehenden Ansprüche,
**dadurch gekennzeichnet, dass** das Fluggerät (26) mit einer zentralen Einheit (29) ausgestattet ist, die geeignet ist, Führungsbefehle, die verwendet werden, um das Fluggerät (26) zu führen, automatisch zu bestimmen.

10. System nach einem der vorstehenden Ansprüche,
**dadurch gekennzeichnet, dass** die Drohne (2) mit mindestens einem Sensor (5) ausgestattet ist.

11. System nach einem der vorstehenden Ansprüche,
**dadurch gekennzeichnet, dass** die Drohne (2) mit einer Positionierungsvorrichtung (18) zum Bestimmen der Position der Drohne (2) ausgestattet ist, wobei die Positionierungsvorrichtung (18) eine Empfangseinheit(19) umfasst, die Teil eines Satellitenpositionierungssystems ist.

12. System nach Anspruch 11,
**dadurch gekennzeichnet, dass** die Drohne (2) mit einem integrierten Trägheitsreferenzsystem (20) ausgestattet ist, das geeignet ist, Trägheitsdaten der Drohne (2) zu erzeugen, und die Positionierungsvorrichtung (18) konfiguriert ist, um die Position der Drohne (2) zumindest ausgehend von den durch das Trägheitsreferenzsystem (20) erzeugten Trägheitsdaten zu bestimmen.

13. System nach einem der vorstehenden Ansprüche,
**dadurch gekennzeichnet, dass** es ein Steuermodul (34) der Drohne (2) umfasst, das konfiguriert ist, um von einem Betreiber bedient werden zu können.

14. System nach einem der vorstehenden Ansprüche,
**dadurch gekennzeichnet, dass** die Drohne (2) mit einer zentralen Einheit (17) ausgestattet ist, die geeignet ist, Führungsbefehle, die verwendet werden, um die Drohne (2) zu führen, automatisch zu bestimmen.

## Claims

1. A system for neutralising at least one target, said system (1) comprising at least:
- a drone (2) configured to be able to fly close to a target (C) and transmit at least positional information of the target (C);
- at least one missile (6) adapted to be guided towards the target (C) in order to neutralise it; and
- at least one control station (8) comprising a reception unit (9B) adapted to receive said positional information transmitted by the drone (2) and a display unit (10A) adapted to display said information to an operator
**characterised in that** it comprises a firing station (14) configured to fire and guide the missile (6), and **in that** :
- the firing station (14) is located remotely from the control station (8);
- the control station (8) is configured to transmit to the firing station (14) the positional information;
- the firing station (14) is configured to transmit to the missile (6) the positional information, which is received from the control station (8);
- the missile (6) is configured so that it can be guided towards the target (C) by means of said positional information received.

2. The system according to claim 1,
**characterised in that** the control station (8) is also configured to transmit the positional information directly to the missile (6).

3. The system according to claim 2,
**characterised in that** the choice between a direct transmission of the positional information from the control station (8) to the missile (6) or an indirect transmission of the positional information via the firing station (14) depends on the current situation.

4. The system according to any one of the preceding claims,
**characterised in that** it comprises at least one flying machine (26) comprising a transmission unit (28) adapted to at least serve as a relay between the drone (2) and at least the control station (8).

5. The system according to claim 4,
**characterised in that** the drone (2) is connected to the control station (8) for an information transmission, via an information transmission chain (30) comprising successively the drone (2), one or more flying machines (26) serving as relays and the control station (8).

6. The system according to any one of the preceding claims,
**characterised in that** it comprises at least one flying machine (26) comprising at least one carrying structure (32) configured to be able to receive at least one drone (2), said flying machine (26) being configured to be able to transport by flight a drone (2) installed on said carrying structure (32).

7. The system according to claim 6,
**characterised in that** the flying machine (26) comprises a power supply unit configured to supply power to a drone installed on the carrying structure.

8. The system according to any one of claims 6 and 7,
**characterised in that** it comprises a module (35) for controlling the flying machine (26) configured to be manipulated by an operator.

9. The system according to any one of the preceding claims,
**characterised in that** the flying machine (26) is provided with a central unit (29) able to automatically determine guidance commands used to guide said flying machine (26).

10. The system according to any one of the preceding claims,
**characterised in that** said drone (2) is provided with at least one sensor (5).

11. The system according to any one of the preceding claims,
**characterised in that** said drone (2) is provided with a positioning device (18) for determining the position of said drone (2), said positioning device (18) comprising a reception unit (19) forming part of a satellite positioning system.

12. The system according to claim 11,
**characterised in that** the drone (2) is provided with an integrated inertial reference system (20), adapted to generate inertial data of the drone (2), and the positioning device (18) is configured to determine the position of the drone (2) at least from the inertial data generated by said inertial reference system (20).

13. The system according to any one of the preceding claims,
**characterised in that** it comprises a module (34) for controlling the drone (2) configured to be manipulated by an operator.

14. The system according to any one of the preceding claims,
**characterised in that** the drone (2) is provided with a central unit (17) adapted to automatically determining guidance commands used to guide said drone (2).
